(19) **Europäisches Patentamt**
**European Patent Office**
**Office européen des brevets**

(11) **EP 3 883 228 B1**

(12) **EUROPEAN PATENT SPECIFICATION**

(45) Date of publication and mention
of the grant of the patent:
**31.07.2024   Bulletin 2024/31**

(21) Application number: **21161808.7**

(22) Date of filing: **10.03.2021**

(51) International Patent Classification (IPC):
*H04N 1/00* *(2006.01)*      *H04N 1/12* *(2006.01)*

(52) Cooperative Patent Classification (CPC):
**H04N 1/00702; H04N 1/00737; H04N 1/00753;
H04N 1/00761; H04N 1/00806;** H04N 1/00724;
H04N 1/00779; H04N 1/1225; H04N 1/1235;
H04N 1/125; H04N 2201/04715

(54) **IMAGE READING APPARATUS, CONVEYING APPARATUS, AND IMAGE FORMING APPARATUS**

BILDLESEVORRICHTUNG, FÖRDERVORRICHTUNG UND BILDERZEUGUNGSVORRICHTUNG

APPAREIL DE LECTURE D'IMAGES, APPAREIL DE TRANSPORT, ET APPAREIL DE FORMATION
D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **18.03.2020   JP 2020047388**

(43) Date of publication of application:
**22.09.2021   Bulletin 2021/38**

(73) Proprietor: **Ricoh Company, Ltd.
Tokyo 143-8555 (JP)**

(72) Inventors:
• **YAMAZAKI, Kimiharu
Tokyo, 143-8555 (JP)**
• **MAKINO, Hideyo
Tokyo, 143-8555 (JP)**

• **MIKAJIRI, Susumu
Tokyo, 143-8555 (JP)**
• **MATSUMOTO, Tohru
Tokyo, 143-8555 (JP)**
• **NAKAYAMA, Satoshi
Tokyo, 143-8555 (JP)**
• **AOYAGI, Kohta
Tokyo, 143-8555 (JP)**
• **ISHII, Tatsuya
Tokyo, 143-8555 (JP)**

(74) Representative: **SSM Sandmair
Patentanwälte Rechtsanwalt
Partnerschaft mbB
Joseph-Wild-Straße 20
81829 München (DE)**

(56) References cited:
**US-A1- 2018 020 108     US-A1- 2019 202 648**

EP 3 883 228 B1

**Description**

TECHNICAL FIELD

The present disclosure relates to an image reading apparatus, a conveying apparatus, and an image forming apparatus.

BACKGROUND ART

For electrophotographic image forming apparatuses, there is an image forming technique for providing a reading unit (a scanner) in a conveying path downstream of a fixing unit, and reading a sheet size and an image size after the fixing, so that the accuracy of the front and back image positions and the absolute image position is increased (for example, Japanese Unexamined Patent Application Publication No. 2018-050139).
US 2018/0020108 A1 discloses an image forming device, which is included in an image forming apparatus, including an image reader, a sheet conveyance passage, a transparent body, an opposing body, and multiple curved opposing portions. The image reader is configured to read an image formed on a target object. The sheet conveyance passage is a passage through which the target object is conveyed. The transparent body is disposed between the sheet conveyance passage and the image reader. The opposing body is disposed facing the transparent body on a side opposite the image reader. The multiple curved opposing portions have respective outwardly curving reference planes. The multiple curved opposing portions are sequentially switched and located at a predetermined image reading position at which the multiple curved opposing portions face the transparent body with a gap through which the target object passes the predetermined image reading position.
US 2019/0202648 A1 discloses a detecting device, which is included in an image forming apparatus, including a detector configured to optically detect at least one of a position of a sheet, a position of an image formed on the sheet, and the image formed on the sheet, and a rotary body disposed at a position opposed to the detector and having a shaft, the rotary body being rotatable about the shaft in a sheet conveying direction of the sheet. The sheet is conveyed to space between the detector and the rotary body. The rotary body has a reference plane on an outer circumferential surface, a line formed on the reference plane and extending in a width direction perpendicular to the sheet conveying direction. The detector detects the line on the reference plane while the rotary body is rotating when the sheet does not intervene between the detector and the rotary body.

SUMMARY OF THE INVENTION

[Technical Problem]

In such a conventional unit for reading an image fixed on a sheet (medium), the conveyed sheet and the image size are detected. In this case, when, in particular, the reading unit includes a reduction optical system, an image magnification error may occur if the conveyance height of a sheet changes with respect to the reading unit. In addition, an image magnification error deviation may occur due to fluttering of the conveyed sheet.
It is an object of the present disclosure to read an image on a conveyed medium with high accuracy.

[Solution to Problem]

In order to solve the above problem, an image reading apparatus according to claim 1 is provided.

[Effect of Invention]

An image on a conveyed medium can be read with high accuracy.

BRIEF DESCRIPTION OF THE DRAWINGS

FIG. 1 is a drawing illustrating a mechanical configuration of an image forming apparatus according to an embodiment;
FIG. 2 is a drawing illustrating an essential portion of a mechanical configuration of the image forming apparatus according to the embodiment;
FIG. 3 is a drawing for explaining a relationship of positions of a reading unit and a print sheet being conveyed in a conventional reduction optical system;

FIG. 4 is a plan view illustrating contact glass according to the present embodiment;

FIG. 5 is an enlarged view illustrating a portion around the contact glass in an image position detection apparatus;

FIG. 6 is a drawing for explaining the principle for improving the detection accuracy in the main scanning direction in the present embodiment;

FIG. 7 is a drawing for explaining a magnification error deviation reduction technique in the main scanning direction according to the present embodiment;

FIG. 8 is a flowchart of a magnification error deviation correction mode; and

FIG. 9 is a drawing illustrating a modified embodiment of a counter member.

## MODES FOR CARRYING OUT THE INVENTION

Hereinafter, an embodiment will be described with reference to the accompanying drawings. In order to facilitate understanding of the description, similar constituent elements in drawings are denoted with the same reference numerals, and redundant description thereabout is omitted.

In the following explanation, the x direction, the y direction, and the z direction are directions perpendicular to each other. The x direction and the y direction are typically horizontal directions. The z direction is the vertical direction. The x direction is the conveying direction of a print sheet M in an image position detection apparatus 400. The y direction is the main scanning direction of a reading unit 401 of the image position detection apparatus 400 and the direction in which the rotation shaft of a counter member 93 extends. In the following explanation, for convenience of explanation, the positive side in the z direction may be referred to as an upper side, and the negative side in the z direction may be referred to a lower side.

<Configuration of image forming apparatus>

Explained in the present embodiment is an image forming apparatus 5 including the image position detection apparatus 400 configured to adjust the position of an image such that the image is output to a desired position on a recording medium on the basis of an image obtained by reading a position detection indicator for detecting the position of an image formed on the recording medium.

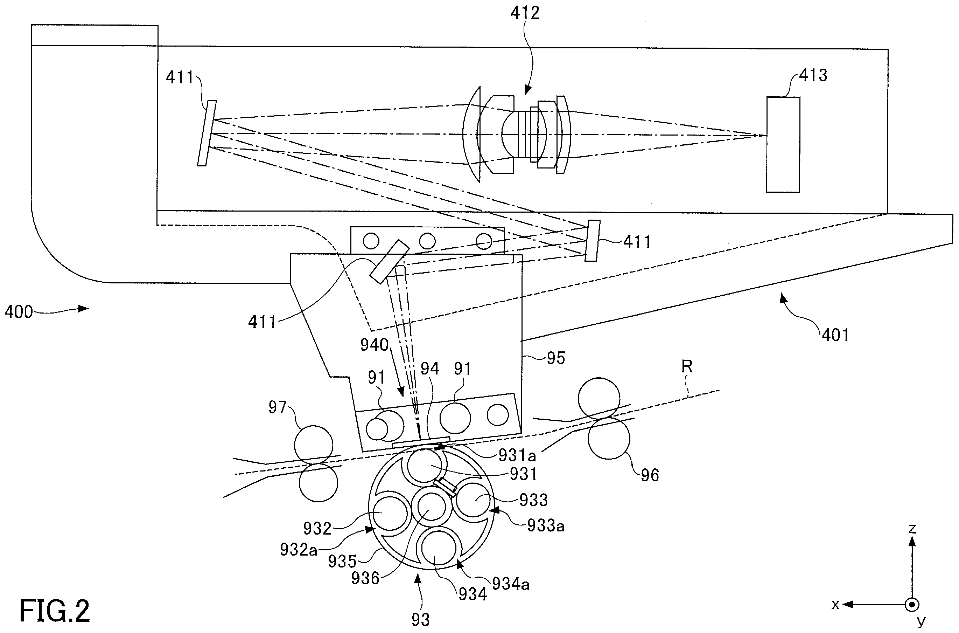

The image forming apparatus 5 according to the present embodiment includes a control apparatus, a print engine, and the image position detection apparatus 400 (see FIG. 2). The control apparatus generates image data to be printed and output, i.e., generates bitmap data of an output target image, on the basis of a print job received by the image forming apparatus 5, and executes an image forming-and-output process by controlling the print engine 300 on the basis of the generated bitmap data.

The print engine 300 is an image forming unit that executes an image forming-and-output process to form and output an image on a recording medium such as the print sheet M, on the basis of bitmap data according to control of the control apparatus. The image position detection apparatus 400 (i.e., an image reading apparatus) reads the position detection indicator printed on the print sheet M, and calculates a correction value for making correction so that bitmap data is output to a desired position on the print sheet M on the basis of the read image.

The correction value calculated by the image position detection apparatus 400 is transmitted to the control apparatus, and is used as a correction value for generating bitmap data and a correction value for conveying the print sheet M to the print engine.

The image position detection apparatus 400 according to the present embodiment calculates a correction value on the basis of coordinates of an end portion of the print sheet M and center coordinates of the position detection indicator on the print sheet M in the read image as explained above. Depending on the cutting shape and sheet thickness of the print sheet M, the coordinates of the end portion of the print sheet M and the position of the image printed on the print sheet M may vary, and in order to cancel this variation in the positions, the correction value used in the image forming-and-output process is calculated.

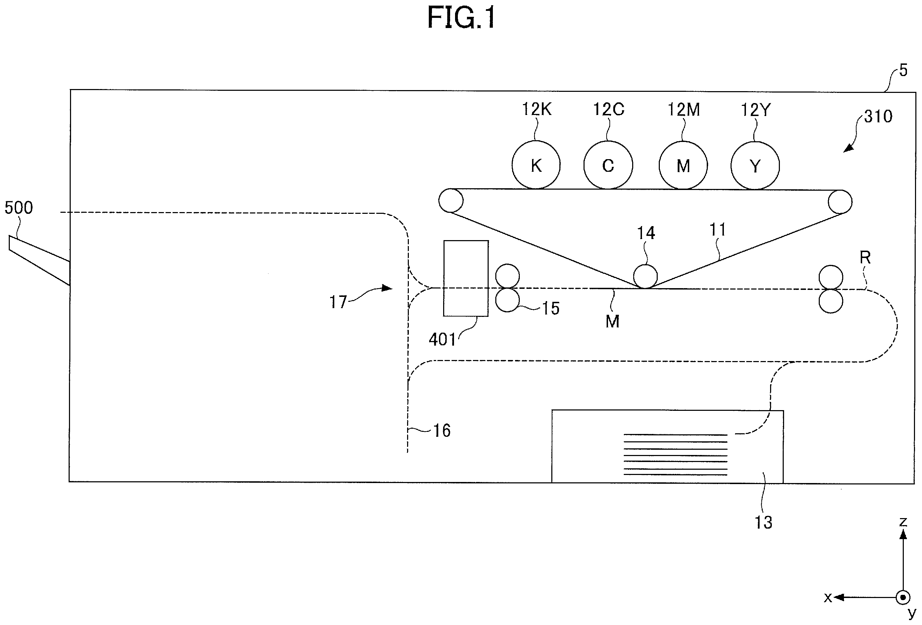

Next, the mechanical configuration of the print engine and the image position detection apparatus 400 and a conveying path R of the print sheet M in the image forming apparatus 5 are explained with reference to FIG. 1. FIG. 1 is a drawing illustrating a mechanical configuration of the image forming apparatus 5 according to the embodiment. As illustrated in FIG. 1, a print processing unit 310 included in the print engine according to the present embodiment has a configuration in which photosensitive drums 12Y, 12M, 12C, and 12K of respective colors (hereinafter collectively referred to as photosensitive drums 12) are arranged along a conveying belt 11, i.e., endless movement means, and this is what is termed as a tandem type. In other words, the multiple photosensitive drums 12Y, 12M, 12C, and 12K are arranged, in order from the upstream side in the conveying direction of the conveying belt 11, along the conveying belt 11, i.e., an intermediate transfer belt, on which an intermediate transfer image, to be transferred to the print sheet M fed from a sheet feeding tray 13, is formed.

Images of respective colors developed with toners, i.e., coloring agents, on the surfaces of the photosensitive drums 12 of the respective colors are superimposed and transferred to the conveying belt 11 to form a full-color image. With the function of a transfer roller 14, at the position closest to the conveying path R of the print sheet M as indicated by a broken line in FIG. 1, the full-color image thus formed on the conveying belt 11 is transferred onto the sheet surface of the print sheet M conveyed on the conveying path R.

The print sheet M having images formed on the sheet surface is further conveyed, and the image is fixed by a fixing roller 15. Then, before the print sheet M is conveyed to the outside of the housing of the image forming apparatus 5, the print sheet M is conveyed to the reading unit 401 included in the image position detection apparatus 400. In the case of the duplex printing, the print sheet M having the image formed and fixed on the first surface (on the front surface) is conveyed by way of a duplex path 16. Accordingly, the fixing roller 15 functions as a fixing processing unit for executing the processing for fixing the image formed on the print sheet M.

In this manner, the print sheet M is conveyed to the transfer position of the transfer roller 14 again, in such a state that an image is ready to be formed on the second surface (on the back surface), i.e., in such a state that the image formed on the conveying belt 11 is ready to be transferred to the second surface of the print sheet M.

The reading unit 401 reads each of the surfaces of the print sheet M conveyed from the print processing unit 310 in the conveying path R of the print sheet M in the image forming apparatus 5, generates a read image, and outputs the read image to a sensor image obtaining unit constituted by an information processing apparatus in the image position detection apparatus 400. The print sheet M read by the reading unit 401 is further conveyed in the image forming apparatus 5, and is discharged to a sheet discharge tray 500. Hereinafter, specific aspects for reading the first surface and the second surface of the print sheet M are explained later.

In the present embodiment, among the elements of the image forming apparatus 5, the elements for conveying a medium such as the print sheet M along the conveying path R by rotating and driving multiple rotation bodies including the transfer roller 14, the fixing roller 15, and the like may also be referred to as a "conveying apparatus". This conveying apparatus includes an image position detection apparatus 400 (i.e., the image reading apparatus) according to the present embodiment on the conveying path R of the medium.

Next, the configuration of the image position detection apparatus 400 according to the present embodiment is explained with reference to FIG. 2. FIG. 2 is a drawing illustrating an essential portion of a mechanical configuration of the image position detection apparatus 400 according to the embodiment.

As illustrated in FIG. 1, the reading unit 401 included in the image position detection apparatus 400 is arranged at the downstream side in the conveying direction of the print sheet M with respect to the fixing roller 15, and at the upstream side in the conveying direction of the print sheet M with respect to a branch 17, i.e., a branch unit, for executing an operation for switching the conveying path R of the print sheet M to either a path for discharging the print sheet M having the image formed thereon to the outside of the housing of the image forming apparatus 5 or a path for conveying the print sheet M to the duplex path 16.

The reading unit 401 generates a read image by optically reading an image such as a position detection indicator formed on the print sheet M. Then, a correction value calculation unit included in the image position detection apparatus 400 calculates a correction value for adjusting the print position of the image on the print sheet M to a desired position, on the basis of the read image having been generated. Therefore, the image position detection apparatus 400 according to the present embodiment can change the color of the counter member 93 and the gap between the counter member 93 and a contact glass 94 according to the color, the sheet thickness, and the like of the print sheet M.

As illustrated in FIG. 2, the image position detection apparatus 400 includes an illumination light source 91, the reading unit 401, the counter member 93, the contact glass 94, and a support member 95. The reading unit 401 functions as a detection mechanism for detecting the position and the color of the conveyed medium (i.e., the print sheet M). The counter member 93 is arranged on the opposite side of the conveyed medium from the reading unit 401, and functions as a background color switching mechanism for switching the background color of the conveyed medium detected by the reading unit 401.

The illumination light source 91 is arranged to face the surface of the conveyed print sheet M on which an image is formed (i.e., an image-formed surface). In a portion of the conveying path R of the print sheet M where the print sheet M passes through the image position detection apparatus 400, the illumination light source 91 emits light to the reading position where the image formed on the print sheet M is read.

The reading unit 401 may be constituted by an image sensor unit 413 including a reflection mirror 411, a condensing lens 412, and an image sensor, or may be constituted by a line sensor in which image sensors are arranged. The reading unit 401 uses the image sensor to read an image formed on the image-formed surface of the print sheet M. When the print sheet M is not at the reading position, the reading unit 401 reads outer circumferential surfaces 931a, 932a, 933a, and 934a of the counter member 93, a reference surface member of the counter member 93, and the like. The reading unit 401 generates a read image on the basis of the quantity of light received by the image sensor.

The counter member 93 is arranged on the back side of the image-formed surface, on which the image is formed, of the conveyed print sheet M. The counter member 93 is configured such that rollers 931, 932, 933, and 934 are held to be rotatable with a roller bracket 935. The rollers 931, 932, 933, and 934 are rotatable rotation bodies having the outer circumferential surfaces (i.e., conveying surfaces) 931a, 932a, 933a, and 934a, respectively, having reference surfaces curved in a protruding shape, and are configured to rotate independently from the roller bracket 935.

The roller bracket 935 is fastened to the roller bracket shaft 936, and when the roller bracket shaft 936 rotates, the roller bracket 935 rotates while holding the rollers 931, 932, 933, and 934. In this manner, by switching the rollers 931, 932, 933, and 934, the outer circumferential surfaces 931a, 932a, 933a, and 934a are selectively arranged at a predetermined reading position facing the contact glass 94 with a gap that allows the print sheet M to pass through.

For example, the reading position is set to a position of, from among the outer circumferential surfaces 931a, 932a, 933a, and 934a, an outer circumferential surface of a roller arranged closest to the contact glass 94 to face the contact glass 94. Alternatively, for example, the reading position may be set to a position shifted toward the contact glass 94 by a distance corresponding to the thickness of the print sheet M with respect to the position of the outer circumferential surface of the roller arranged closest to the contact glass 94 to face the contact glass 94.

The contact glass 94 is constituted by a light transmissive member, and is arranged at a position facing the image-formed surface of the print sheet M conveyed to the reading position.

The support member 95 is a member to which the illumination light source 91 and the reading unit 401 are fixed. The portion of the conveying path R of the print sheet M where the print sheet M passes through the reading unit 401 is supported by the support member 95 in a separated manner from the upstream portion and the downstream portion of the conveying path R. A conveying roller 96 and a conveying roller 97 are arranged in the upstream portion and the downstream portion of the conveying path R, which are other than the portion of the conveying path R of the print sheet M where the print sheet M passes through the reading unit 401.

When the print sheet M is conveyed, the reading unit 401 reads the image-formed surface through the contact glass 94 from a side indicated by an arrow 940. The outer circumferential surface 931a of the roller 931 is arranged at the position facing the contact glass 94, and rotates as the print sheet M is conveyed. In this manner, the roller 931 has the conveying function of the print sheet M, and even with such a small gap that would otherwise not allow the print sheet M to move, a sheet jam and the like is unlikely to occur.

The rollers 931, 932, 933, and 934 are rollers which are different in the color or the diameter or different in both of the color and the diameter. For example, the roller 931 is black with a standard diameter, the roller 932 is white with a relatively small diameter, the roller 933 is white with a standard diameter, and the roller 934 is black with a relatively small diameter.

Therefore, according to the color of the print sheet M, the roller is switched, so that the border between the print sheet M and the roller can be easily recognized in the read image. The diameter of the roller can be changed by switching the roller depending on the sheet thickness of the print sheet M and depending on whether being used in a shading operation. Also, the size of the gap between the print sheet M and the counter member 93 can be changed by switching the roller.

Further, driving means for rotating and driving the rollers 931, 932, 933, and 934 may be provided. In this case, the print sheet M can be conveyed even when the gap is small between the contact glass 94 and one of the rollers 931, 932, 933, and 934 that is arranged to face the contact glass 94.

<Position detection method of print sheet in main scanning direction>

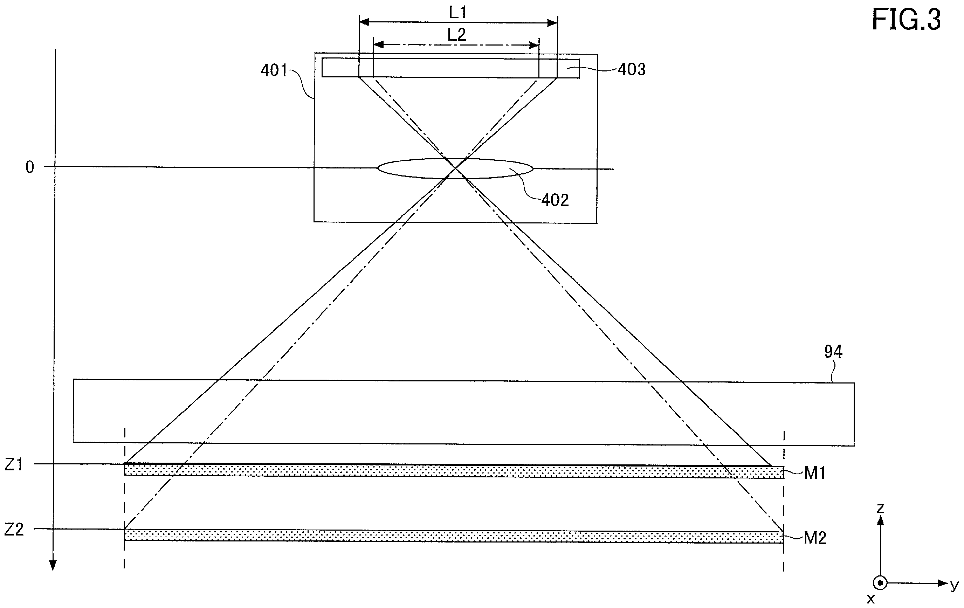

In this case, problems associated with a conventional reduction optical system are explained with reference to FIG. 3. FIG. 3 is a drawing for explaining a relationship of positions of a reading device (i.e., a reading unit 401), a contact glass 94, and print sheets M1, M2 in the conventional reduction optical system. In FIG. 3, the main scanning direction (the y direction) of the reading unit 401 is in the right-and-left direction.

The reading unit 401 of the image position detection apparatus 400 according to the present embodiment is what is termed as a "reduction optical system", and includes a lens 402 and an image sensor 403. FIG. 3 illustrates the internal configuration of the reduction optical system in a simplified manner, but in actual implementations, various configurations such as, for example, the configuration illustrated in FIG. 2 may be employed. For example, the reading unit 401 may be configured such that an image condensed by multiple lenses 402 are read by the image sensor 403. The "lens 402" of the simple configuration as illustrated in FIG. 3 includes the "reflection mirror 411" and the "condensing lens 412" of the configuration as illustrated in FIG. 2. The "image sensor 403" of the simple configuration as illustrated in FIG. 3 includes the "image sensor unit 413" of the configuration as illustrated in FIG. 2.

Hereinafter, in the reading unit 401 in such a reduction optical system, a case where the position of a sheet to be read varies is considered. For example, in FIG. 3, the position of the lens 402 in the z direction is defined as zero, a print sheet M1 is at such a position that the distance from the lens 402 to the image-formed surface is Z1, and a print sheet M2 is at such a position that the distance from the lens 402 to the image-formed surface is Z2 which is larger than Z1. In this case, as illustrated in FIG. 3, a size L1 of an image in the y direction on the print sheet M1 captured by the image sensor 403 is larger than a size L2 of an image in the y direction on the print sheet M2 captured by the image sensor 403. In this manner, in the conventional reduction optical system, there is a problem in that, even though the print sheets M1, M2 are of the same size, the sizes L1, L2 of the read images may change when the reading heights (Z1, Z2) are different.

In order to solve the problems associated with such a reduction optical system and to measure the absolute size of the print sheet M with high accuracy, it is desired to read the print sheet M at a desired position without causing fluttering of the print sheet M. To this end, it is desired to achieve both of a technique for stabilizing the conveyance of the image-formed surface of the print sheet M during reading of the image without causing fluttering of the print sheet M and a technique of detecting the position of the image-formed surface in the z direction with high accuracy.

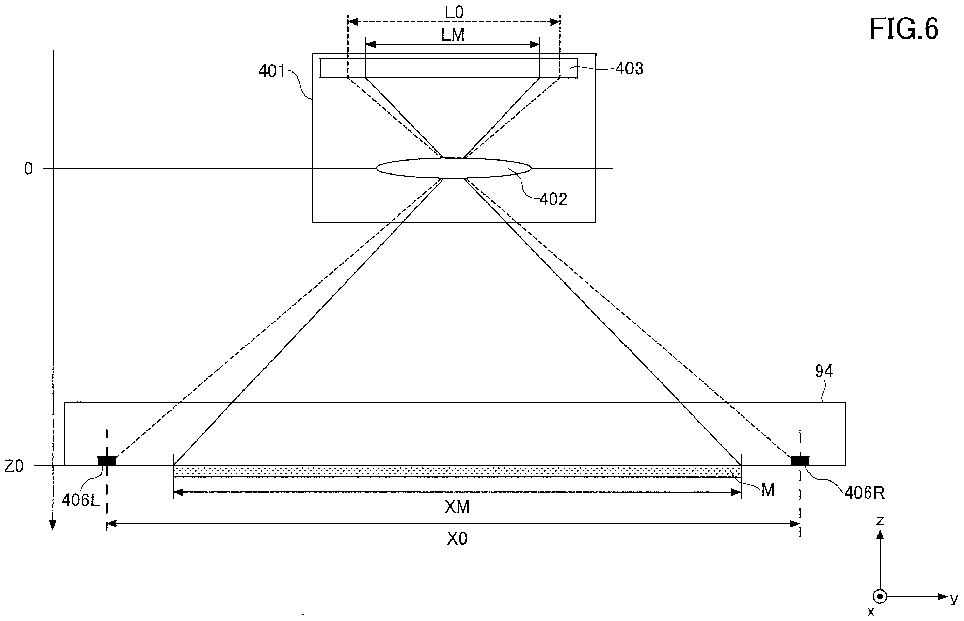

In the present embodiment, the contact glass 94 is provided directly under the illumination light source 91, and when the print sheet M is conveyed directly under the illumination light source 91, the print sheet M is conveyed while being brought into contact with the contact glass 9 (see FIG. 6). Therefore, by stabilizing the reading height, an occurrence of a magnification error caused by difference in the reading height can be prevented. With the configuration explained later, the position of the print sheet M in the z direction can be detected with high accuracy.

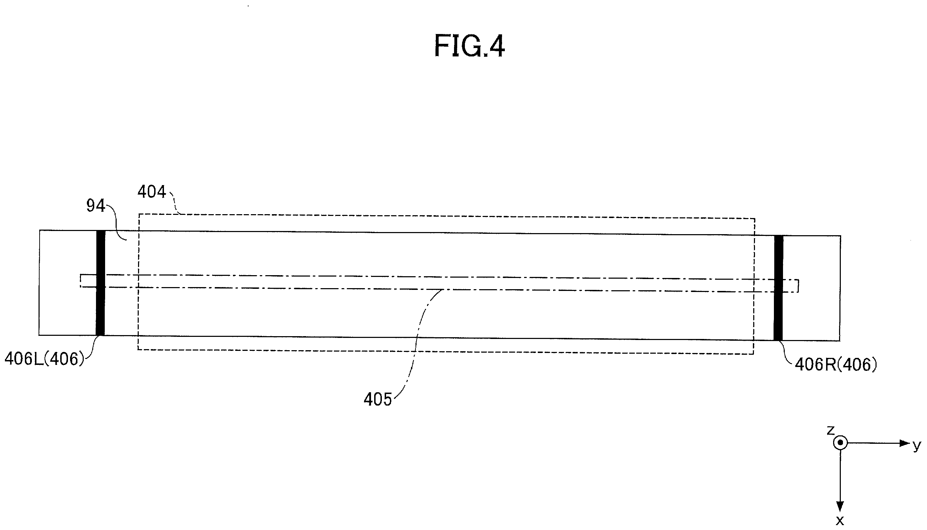

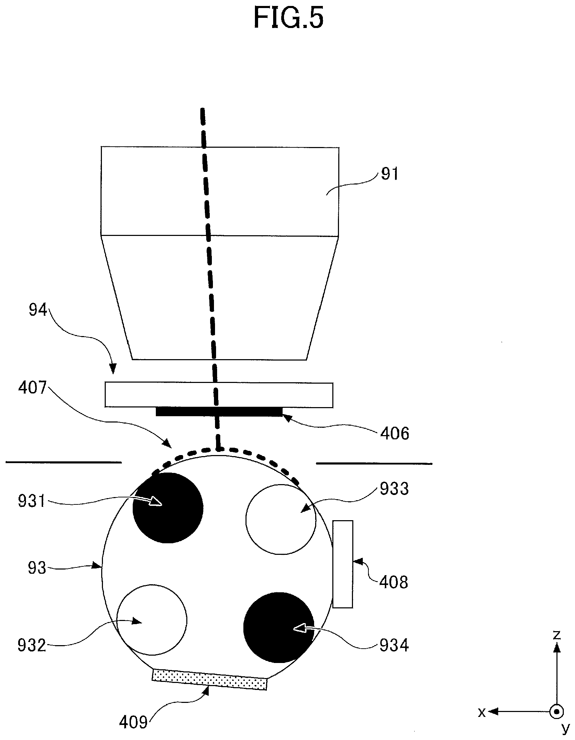

FIG. 4 is a plan view illustrating the contact glass 94 according to the present embodiment. FIG. 5 is an enlarged view of the contact glass 94 and its surroundings of the image position detection apparatus 400 according to the present embodiment. FIG. 5 illustrates the contact glass 94 and its surroundings of the image position detection apparatus 400 as illustrated in FIG. 2 in an enlarged manner.

In FIG. 4, a sheet passage area 404, i.e., a range in which the print sheet M passes, is indicated by a broken line, and a reading line 405 in which the reading unit 401 can perform reading is indicated by a long dashed short dashed line. As illustrated in FIG. 4, the reading line 405 has a larger width than the sheet passage area 404 in the y direction. As illustrated in FIG. 4, in the present embodiment, in order to solve the above problems (i.e., to detect the position of the print sheet M in the z direction with high accuracy), the contact glass 94 is provided with a pair of line segments extending in the x direction, i.e., a left longitudinal line 406L and a right longitudinal line 406R. Hereinafter, the left longitudinal line 406L and the right longitudinal line 406R may be collectively referred to as "longitudinal lines 406".

The left longitudinal line 406L and the right longitudinal line 406R are arranged on the outer sides of the sheet passage area 404 in the y direction and are arranged within the range of the reading line 405. The two longitudinal lines 406 are arranged on the outer sides of the sheet passage area 404, and the longitudinal line 406 and the print sheet M do not cross each other, and therefore, the longitudinal line 406 does not obstruct the measurement of the edges of the print sheet M with the reading unit 401. In addition, the two longitudinal lines 406 are arranged within the range of the reading line 405, and therefore, the reading unit 401 can constantly detect the longitudinal lines 406, and can constantly obtain the number of pixels of the distance between the left longitudinal line 406L and the right longitudinal line 406R. The two longitudinal lines 406L, 406R provided on the contact glass 94 function as "an indicator indicating a reference position" for detecting the position of the print sheet M.

For example, as illustrated in FIG. 5, the left longitudinal line 406L and the right longitudinal line 406R can be provided by any method such as printing on a surface of the contact glass 94 facing the counter member 93 on the negative side in the z direction from among the principal surfaces of the contact glass 94 in the z direction.

As illustrated in FIG. 5, the revolver (i.e., the counter member 93) is arranged under the contact glass 9 (on the negative side in the z direction). In the present embodiment, a shading surface 407 is provided between the roller 931 and the roller 933 of the counter member 93, a glass scale 408 is provided between the roller 933 and the roller 934, and a gray balance sheet 409 (i.e., a gray balance adjustment surface) is provided between the roller 932 and the roller 934. The longitudinal lines 406 are constantly read by the reading unit 401, but when the shading correction is in effect, the captured image is corrected so that the longitudinal lines 406 do not appear in the read image. In the present embodiment, for example, when the background of the captured image captured by the reading unit 401 is the shading surface 407, the longitudinal lines 406 can be detected by turning off the shading control of the image position detection apparatus 400.

FIG. 6 is a drawing for explaining the principle of detection accuracy improvement in the main scanning direction according to the present embodiment. As described above, the print sheet M is conveyed along the lower surface of the contact glass 94 while being in contact with the lower surface of the contact glass 94. Therefore, as illustrated in FIG. 6, the print sheet M and both of the left longitudinal line 406L and the right longitudinal line 406R of the contact glass 94 are on the same straight line (i.e., the positions thereof in the z direction are at the same position Z0), and therefore, the magnification rates in the main scanning direction as seen from the reading unit 401 are the same.

In this case, a distance X0 between the left longitudinal line 406L and the right longitudinal line 406R provided on the contact glass 94 can be accurately measured in advance by using, for example, a highly-accurate three-dimensional measurement device such as Nexiv (manufactured by Nikon) and the like. Therefore, how much the captured image is enlarged or reduced with respect to the absolute reference size (i.e., the distance X0 between the longitudinal lines 406) can be determined at the same position Z0 as the longitudinal lines 406 in the z direction. Accordingly, how much the print sheet M is enlarged or reduced can also be found, and the accuracy for detecting the position in the main scanning direction in the reduction optical system can be enhanced.

This effect is hereinafter further explained. As illustrated in FIG. 6, a length of the print sheet M in the main scanning direction (i.e., the y direction) is denoted as XM. This length XM is a length of the print sheet M that is to be derived from the captured image captured by the reading unit 401. The distance between the longitudinal lines 406 on the contact glass 94 read by the reading unit 401 is denoted as L0. The length of the print sheet M in the main scanning direction read by the reading unit 401 is denoted as LM. In this case, the length XM of the print sheet M can be accurately calculated by using the following expression (1), as long as the condition that the print sheet M is in contact with the lower surface of the contact glass 94 and the image-formed surface is at the same position Z0 as the longitudinal lines 406 in the z direction is satisfied.

$$XM = X0 \times (LM/L0) \ldots (1)$$

As described above, the actual distance X0 and the detection distance L0 between the left longitudinal line 406L and the right longitudinal line 406R provided on the contact glass 94 are reference values accurately measured in advance. The ratio L0/X0 or X0/L0 is accurate information about the distance from the reading unit 401 to the print sheet M. The length LM of the print sheet M in the main scanning direction is measured at the same position as the longitudinal lines 406 in the z direction, and therefore, a ratio (LM/L0) of LM to L0 can be said to accurately correspond to the ratio XM/X0 of the actual distance. As a result, in the present embodiment, the accuracy for detecting the position in the main scanning direction in the reduction optical system can be enhanced by measuring the print sheet M under the condition as illustrated in FIG. 6.

The procedure for detecting the position of the print sheet M in the main scanning direction according to the present embodiment may be, for example, as follows.

(1) The counter member 93 is rotated so that the background of the captured image captured by the reading unit 401 becomes the shading surface 407. Upon being triggered by this operation, the shading control of the image position detection apparatus 400 is set to the OFF state, and the longitudinal line 406, which is processed to be erased from the captured image captured by the reading unit 401 during the shading control, is displayed and detectable in the captured image.

(2) The reading unit 401 reads the positions of the longitudinal lines 406L, 406R on the contact glass 94 and the position of the print sheet M to calculate the above parameters L0, LM.

(3) By using the above parameters L0, LM calculated in the above (2) and the distance X0 of which the actually measured value has been obtained in advance, the actual length XM of the print sheet M in the main scanning direction is calculated from the above expression (1), and the position of the print sheet M in the main scanning direction is derived. The image position detection apparatus 400 adjusts the correction value for adjusting the print position of the image on the print sheet M, explained with reference to FIG. 2, to a desired position so as to conform to the actual position information, on the basis of information about the derived position of the print sheet M.

<Magnification error deviation reduction>

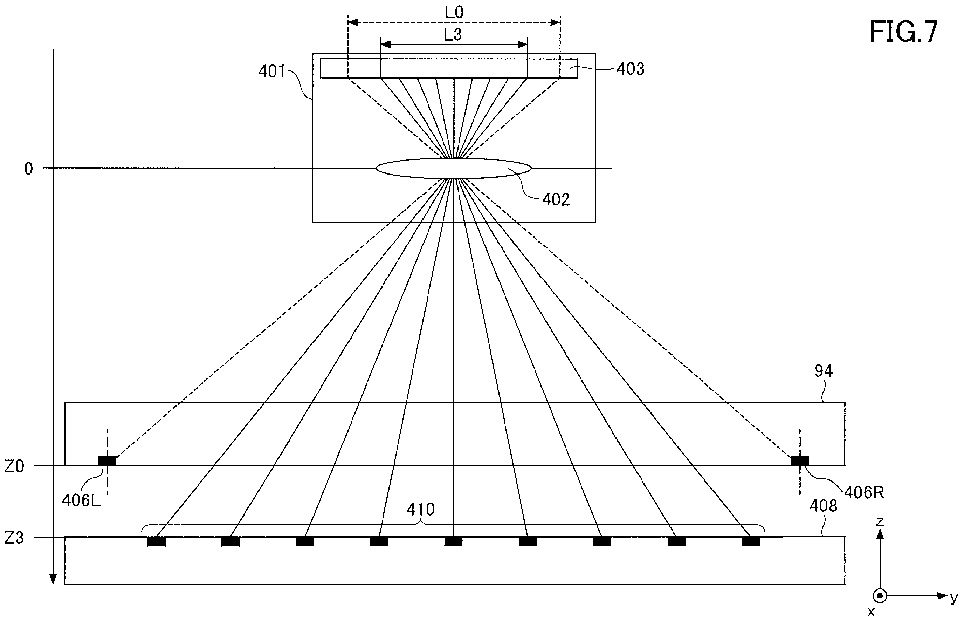

FIG. 7 is a drawing for explaining the magnification error deviation reduction technique in the main scanning direction according to the present embodiment. For example, when the frames of the main bodies of the image forming apparatus 5 and the image position detection apparatus 400 change due to thermal expansion and slight deformation of the frames during shipping and the like, the position Z0 of the longitudinal lines 406 in the z direction as illustrated in FIG. 6 changes, and the relationship of positions between the lens 402 and the image sensor 403 of the reading unit 401 may slightly change. In such a case, a situation may occur where the magnification error in the main scanning direction cannot be sufficiently reduced and a deviation (a magnification error deviation) occurs.

Therefore, in the present embodiment, the magnification error deviation in the main scanning direction is corrected by using the glass scale 408 attached to the revolver (i.e., the counter member 93). Similarly with the longitudinal line 406, the surface of the glass scale 408 is provided with a group of multiple longitudinal lines arranged with a predetermined interval in the main scanning direction (the y direction), and a scale 410 is constituted by a group of these longitudinal lines. The glass scale 408 is made of glass and is not easily deformed by heat, and therefore, the intervals between multiple longitudinal lines of the scale 410 on the glass scale 408 are less likely to change, and the intervals can be used as accurate position information. For example, a width L3 of the scale 410 in the main scanning direction on the glass scale 408 read by the reading unit 401 as illustrated in FIG. 7 and the relationship of positions of the longitudinal lines therein may be deemed as being unchangeable.

Therefore, when the above information and the distance L0 between the longitudinal lines 406 on the contact glass 94 read by the reading unit 401 are compared, the degree of enlargement and reduction of the distance L0 between the longitudinal lines with respect to the absolute size of the scale 410 can be determined, so that the magnification error deviation on the contact glass 94 can be determined, and an adjustment can be performed to cancel this deviation.

For example, in a case where the distance L0 between the longitudinal lines 406 changes from a reference value with respect to the width L3 of the scale 410 in the main scanning direction and the interval between the longitudinal lines therein, the magnification error correction value is calculated to cancel this change, and the distance L0 between the longitudinal lines 406 is corrected by using this correction value. The glass scale 408 functions as a "surface for correcting the magnification error deviation in the main scanning direction".

In order to adjust the magnification error deviation, it is conceivable to provide the glass scale 408 in the image position detection apparatus 400 similarly with the present embodiment and to constantly perform adjustment operation by using the glass scale 408 as an adjustment jig dedicated for the image position detection apparatus 400 in which the glass scale 408 is provided. Alternatively, without individually providing an adjustment jig such as the glass scale 408 in the image position detection apparatus 400, a common jig may be used to adjust each of image position detection apparatuses 400.

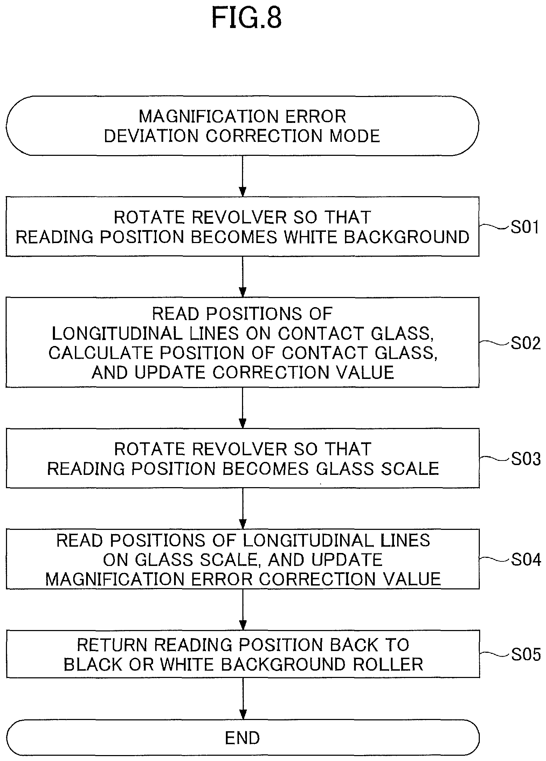

The magnification error deviation reduction technique explained with reference to FIG. 7 can be implemented by causing the image position detection apparatus 400 to perform the "magnification error deviation correction mode" in the present embodiment. FIG. 8 is a flowchart of the magnification error deviation correction mode.

In step S01, the revolver (i.e., the counter member 93) is rotated so that the reading position of the reading unit 401 becomes a white background.

In step S02, the reading unit 401 reads the positions of the longitudinal lines 406L, 406R on the contact glass 94, the position of the contact glass 94 in the z direction is calculated, and the correction value is updated.

In step S03, the revolver (i.e., the counter member 93) is rotated so that the reading position of the reading unit 401 becomes the position of the glass scale 408.

In step S04, the reading unit 401 reads the position of the scale 410 on the glass scale 408, and the magnification error correction value in the main scanning direction is updated.

In step S05, the revolver (i.e., the counter member 93) is rotated so that the reading position of the reading unit 401 becomes the black background or the white background.

As described above, in the magnification error deviation correction mode, the reading unit 401 corrects position information about the reference position detected from the longitudinal lines 406L, 406R on the contact glass 94 (i.e., the position of the longitudinal lines 406L, 406R in the z direction) on the basis of information detected from the scale 410 of the glass scale 408 (i.e., position information about the longitudinal line group constituting the scale 410). Therefore, the magnification error deviation in the main scanning direction can be corrected, and the accuracy of the reading unit 401 for detecting the position of the print sheet M in the main scanning direction can be further improved.

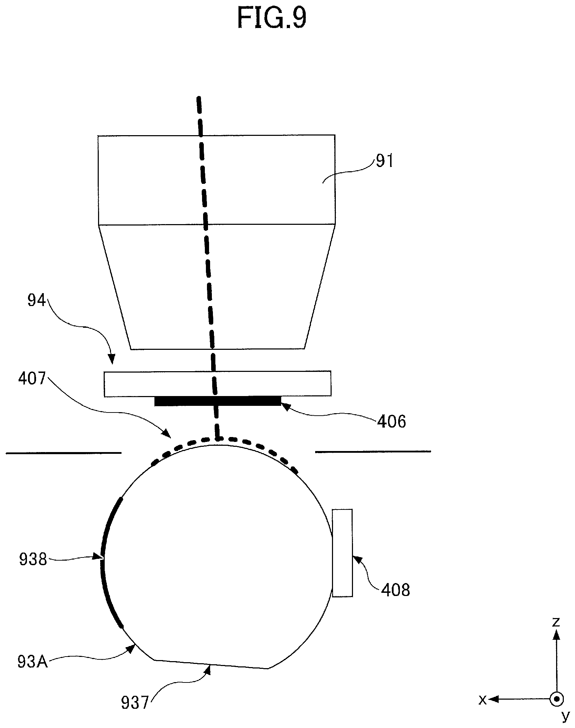

FIG. 9 is a drawing illustrating a modified embodiment of a counter member. The counter member 93 illustrated in FIG. 5 includes rollers 931, 932, 933, and 934 for the background to prevent damage to images that are likely to occur when a thick sheet is conveyed and to prevent jams that are likely to occur when a thin sheet is conveyed. However, when such risk is extremely small, a counter member 93A that does not have any roller can be used.

As illustrated in FIG. 9, instead of the rollers 931, 932, 933, and 934, the counter member 93A includes a flat surface 937 (i.e., a gray balance adjustment surface) and a curved surface 938 (i.e., a conveying surface). The curved surface 938 is white or black, and is used to serve as a background when the reading unit 401 reads images. The flat surface 937 is the gray balance adjustment surface, and is used to attach a sheet of an intermediate color for gray balance adjustment (adjustment for color matching of reading). The counter member 93A according to the modified embodiment is also provided with a shading surface 407 and a glass scale 408, and can execute correction processing such as the magnification error deviation correction mode.

In other words, the image position detection apparatus 400 may employ a configuration having, as a background color switching mechanism for switching the background color of the print sheet M detected by the reading unit 401, a roller mechanism (i.e., rollers 931, 932, 933, and 934) such as the counter member 93 as illustrated in FIG. 5 arranged on the opposite side of the print sheet M and the contact glass 94 from the reading unit 401 (i.e., the detection mechanism), or may employ a configuration having shapes of the curved surface and the flat surface in multiple colors such as the counter member 93A illustrated in FIG. 9. Both of the counter members 93, 93A include background portions in multiple colors provided to change the circumferential surface facing the reading unit 401.

As described above, the image position detection apparatus 400 according to the present embodiment includes the reading unit 401 serving as a detection mechanism for detecting the position and the color of the print sheet M, the counter member 93 arranged on the opposite side of the print sheet M from the reading unit 401 and serving as a background color switching mechanism for switching the background color of the print sheet M detected by the reading unit 401, and the contact glass 94 provided between the reading unit 401 and the counter member 93. The reading unit 401 is a reduction optical system. The print sheet M is conveyed between the contact glass 94 and the counter member 93, and the contact glass 94 is provided so that the print sheet M is conveyed while being in contact with a surface of the contact glass 94 on the opposite side from the reading unit 401. Further, the contact glass 94 is provided with the pair of longitudinal lines 406L, 406R as the indicator indicating the reference position, and the reading unit 401 derives information about the distance from the reading unit 401 to the image-formed surface of the print sheet M on the basis of position information detected from the longitudinal lines 406L, 406R, and calculates the position of the print sheet M on the basis of information about the distance.

The print sheet M is conveyed while being in contact with the contact glass 94, so that the reading height of the image-formed surface of the print sheet M with respect to the reading unit 401 can be stabilized. By using the position information about the pair of longitudinal lines 406L, 406R read by the reading unit 401, the reading height position of the contact glass 94 can be derived accurately, and accordingly, the distance from the reading unit 401 to the image-formed surface of the print sheet M can be calculated accurately, so that the position of the print sheet M can be calculated accurately. Therefore, the image position detection apparatus 400 according to the present embodiment can accurately read an image on a conveyed medium such as the print sheet M.

The present embodiment has been described above with reference to the above concrete examples. However, the present disclosure is not limited to these exemplary embodiments, but by the scope of the following claims.

In the above embodiment, the longitudinal lines 406 printed on the contact glass 94 are shown as the indicator indicating the reference position for identifying the position of the contact glass 94 in the z direction, but as long as the longitudinal lines 406 can serve as indicators, the shapes of the longitudinal lines 406 are not limited to longitudinal lines. For example, indicators in a circular shape may be employed.

The present application is based on and claims the benefit of priority to Japanese patent application No. 2020-047388 filed on March 18, 2020.

REFERENCE SIGNS LIST

| | |
|---|---|
| 5 | image forming apparatus |
| 93, 93A | counter member (background color switching mechanism) |
| 94 | contact glass (light transmissive member) |
| 400 | image position detection apparatus (image reading apparatus) |
| 401 | reading unit (detection mechanism) |
| 406L | left longitudinal line (indicator) |
| 406R | right longitudinal line (indicator) |
| 407 | shading surface |
| 408 | glass scale (surface for correcting the magnification error deviation in the main scanning direction) |
| 409 | gray balance sheet (gray balance adjustment surface) |
| 410 | scale |
| 931a, 932a, 933a, and 934a | outer circumferential surfaces (conveying surfaces) of rollers |
| 937 | flat surface (gray balance adjustment surface) |
| 938 | curved surface (conveying surface) |
| M | print sheet (conveyed medium) |
| R | conveying path |

**Claims**

1. An image reading apparatus (5) comprising:

   a detection mechanism (401) configured to detect a position of a conveyed medium (M);
   a background color switching mechanism (93, 93A) arranged on an opposite side of the conveyed medium from the detection mechanism (401), and configured to switch a background color of the conveyed medium (M) detected by the detection mechanism (401); and
   a light transmissive member (94) arranged between the detection mechanism (401) and the background color switching mechanism (93, 93A),
   wherein the conveyed medium (M) is conveyed between the light transmissive member (94) and the background color switching mechanism (93, 93A) while being in contact with the light transmissive member (94),
   the light transmissive member (94) is provided with two indicators (406L, 406R) indicating a reference position, and
   the detection mechanism (401) is configured to calculate the position of the conveyed medium (M) in a main scanning direction based on position information detected from the reference position,
   wherein the background color switching mechanism (93, 93A) includes background portions in a plurality of colors provided to change a circumferential surface facing the detection mechanism (401), and

the circumferential surface includes a shading surface (407), a conveying surface (931a to 934a), a surface for correcting a magnification error deviation in a main scanning direction (408), and a gray balance adjustment surface (409),

wherein when the detection mechanism (401) reads the indicator of the light transmissive member (94), the background color switching mechanism (93, 93A) performs driving and controlling so that the shading surface (407) becomes a background colour of the conveyed medium (M), and the detection mechanism (401) reads the indicators (406L, 406R) with a shading control being turned off,

wherein the surface for correcting the magnification error deviation (408) includes a glass scale (408) in which a scale (410) is formed by a group of multiple longitudinal lines arranged along the main scanning direction of the detection mechanism (401), and

in the magnification error deviation correction mode, the detection mechanism (401) corrects, based on information detected from the scale (410) of the glass scale (408), the position information detected from the reference position,

and when the distance (L0) between the indicators (406L, 406R) read by the detection mechanism (401) changes from a reference value with respect to the glass scale (408) and then calculates, on the basis of position information about the indicators (406R, 406L), a magnification error correction value to cancel the change so that the distance (L0) is corrected using the magnification error correction value.

2. The image reading apparatus (5) according to claim 1, wherein the detection mechanism (401) derives, based on the position information detected from the reference position, information about a distance of the conveyed medium (M) from the detection mechanism (401), and calculates, based on the information about the distance, the position of the conveyed medium (M).

3. The image reading apparatus (5) according to claim 1 or 2, wherein the indicator (406L, 406R) is provided at a position on an outer side with respect to both ends of a maximum width of the conveyed medium (M) in a direction crossing a direction in which the conveyed medium (M) is conveyed.

4. The image reading apparatus (5) according to claim 3, wherein the indicator (406L, 406R) includes a pair of line segments arranged with a predetermined interval in the direction crossing the direction in which the conveyed medium (M) is conveyed, the pair of line segments being arranged on the light transmissive member (94) so as to extend along the conveying direction.

5. The image reading apparatus (5) according to claim 1, wherein in a magnification error deviation correction mode, the background color switching mechanism (93, 93A) performs driving and controlling so that the surface for correcting the magnification error deviation (408) is automatically positioned within a reading area of the detection mechanism (401).

6. A conveying apparatus configured to convey a medium by rotating and driving a plurality of rotation bodies, wherein the conveying apparatus includes the image reading apparatus (5) of any one of claims 1 to 5 on a conveying path of the medium (M).

7. An image forming apparatus comprising the image reading apparatus (5) of any one of claims 1 to 5.

**Patentansprüche**

1. Bildlesegerät (5), umfassend:

einen Erfassungsmechanismus (401), der so konfiguriert ist, dass er eine Position eines geförderten Mediums (M) erfasst;

einen Hintergrundfarben-Umschaltmechanismus (93, 93A), der auf einer dem Erfassungsmechanismus (401) gegenüberliegenden Seite des geförderten Mediums angeordnet und so konfiguriert ist, dass er eine Hintergrundfarbe des durch den Erfassungsmechanismus (401) erfassten geförderten Mediums (M) umschaltet; und

ein lichtdurchlässiges Element (94), das zwischen dem Erfassungsmechanismus (401) und dem Hintergrundfarbschaltmechanismus (93, 93A) angeordnet ist,

wobei das beförderte Medium (M) zwischen dem lichtdurchlässigen Element (94) und dem Hintergrundfarbschaltmechanismus (93, 93A) befördert wird, während es in Kontakt mit dem lichtdurchlässigen Element (94) ist,

das lichtdurchlässige Element (94) mit zwei Anzeigen (406L, 406R) versehen ist, die eine Referenzposition anzeigen, und

der Erfassungsmechanismus (401) so konfiguriert ist, dass er die Position des geförderten Mediums (M) in einer Hauptabtastrichtung auf der Grundlage der von der Referenzposition erfassten Positionsinformationen berechnet,

wobei der Hintergrundfarben-Umschaltmechanismus (93, 93A) Hintergrundabschnitte in einer Vielzahl von Farben enthält, die vorgesehen sind, um eine dem Erfassungsmechanismus (401) zugewandte Umfangsfläche zu verändern, und

die Umfangsfläche eine Schattierungsfläche (407), eine Transportfläche (931a bis 934a), eine Fläche zum Korrigieren einer Vergrößerungsfehlerabweichung in einer Hauptabtastrichtung (408) und eine Graubalance-Einstellfläche (409) aufweist,

wobei, wenn der Erfassungsmechanismus (401) den Indikator des lichtdurchlässigen Elements (94) liest, der Hintergrundfarben-Umschaltmechanismus (93, 93A) einen Antrieb und eine Steuerung durchführt, so dass die Schattierungsfläche (407) zu einer Hintergrundfarbe des geförderten Mediums (M) wird, und der Erfassungsmechanismus (401) die Indikatoren (406L, 406R) liest, wobei eine Schattierungssteuerung ausgeschaltet ist,

wobei die Oberfläche zum Korrigieren der Vergrößerungsfehlerabweichung (408) eine Glasskala (408) enthält, in der eine Skala (410) durch eine Gruppe von mehreren Längslinien gebildet ist, die entlang der Hauptabtastrichtung des Erfassungsmechanismus (401) angeordnet sind, und

in dem Vergrößerungsfehlerabweichungs-Korrekturmodus korrigiert der Erfassungsmechanismus (401) auf der Grundlage von Informationen, die von der Skala (410) der Glasskala (408) erfasst werden, die Positionsinformationen, die von der Referenzposition erfasst werden,

und wenn sich der von dem Erfassungsmechanismus (401) gelesene Abstand (L0) zwischen den Anzeigern (406L, 406R) von einem Referenzwert in Bezug auf die Glasskala (408) ändert, und dann auf der Grundlage von Positionsinformationen über die Anzeiger (406R, 406L) einen Vergrößerungsfehlerkorrekturwert berechnet, um die Änderung aufzuheben, so dass der Abstand (L0) unter Verwendung des Vergrößerungsfehlerkorrekturwertes korrigiert wird.

2. Bildlesegerät (5) nach Anspruch 1, wobei der Erfassungsmechanismus (401) auf der Grundlage der von der Referenzposition erfassten Positionsinformationen Informationen über einen Abstand des geförderten Mediums (M) von dem Erfassungsmechanismus (401) ableitet und auf der Grundlage der Informationen über den Abstand die Position des geförderten Mediums (M) berechnet.

3. Bildlesegerät (5) nach Anspruch 1 oder 2, wobei der Indikator (406L, 406R) an einer Position an einer Außenseite in Bezug auf beide Enden einer maximalen Breite des transportierten Mediums (M) in einer Richtung vorgesehen ist, die eine Richtung kreuzt, in der das transportierte Medium (M) transportiert wird.

4. Bildlesegerät (5) nach Anspruch 3, wobei der Indikator (406L, 406R) ein Paar von Zeilensegmenten enthält, die mit einem vorbestimmten Abstand in der Richtung angeordnet sind, die die Richtung kreuzt, in der das geförderte Medium (M) gefördert wird, wobei das Paar von Zeilensegmenten auf dem lichtdurchlässigen Element (94) so angeordnet ist, dass es sich entlang der Förderrichtung erstreckt.

5. Bildlesegerät (5) nach Anspruch 1, wobei in einem Vergrößerungsfehlerabweichungs-Korrekturmodus der Hintergrundfarben-Umschaltmechanismus (93, 93A) einen Antrieb und eine Steuerung durchführt, so dass die Oberfläche zur Korrektur der Vergrößerungsfehlerabweichung (408) automatisch innerhalb eines Lesebereichs des Erfassungsmechanismus (401) positioniert wird.

6. Fördervorrichtung, die so konfiguriert ist, dass sie ein Medium durch Rotation und Antrieb einer Vielzahl von Rotationskörpern fördert,

wobei die Transportvorrichtung die Bildlesevorrichtung (5) nach einem der Ansprüche 1 bis 5 auf einem Transportweg des Mediums (M) enthält.

7. Bilderzeugungsgerät mit dem Bildlesegerät (5) nach einem der Ansprüche 1 bis 5.

**Revendications**

1. Appareil de lecture d'image (5) comprenant :

un mécanisme de détection (401) configuré pour détecter une position d'un support transporté (M) ;

un mécanisme de commutation de couleur d'arrière-plan (93, 93A) agencé sur un côté du support transporté opposé relativement au mécanisme de détection (401), et configuré pour commuter une couleur d'arrière-plan du support transporté (M) détecté par le mécanisme de détection (401) ; et

un élément de transmission de couleur (94) agencé entre le mécanisme de détection (401) et le mécanisme de commutation de couleur d'arrière-plan (93, 93A),

dans lequel le support transporté (M) est transporté entre l'élément de transmission de couleur (94) et le mécanisme de commutation de couleur d'arrière-plan (93, 93A) tout en étant en contact avec l'élément de transmission de couleur (94),

l'élément de transmission de couleur (94) est pourvu de deux indicateurs (406L, 406R) indiquant une position de référence, et

le mécanisme de détection (401) est configuré pour calculer la position du support transporté (M) dans une direction de balayage principale sur la base d'informations de position détectées à partir de la position de référence,

dans lequel le mécanisme de commutation de couleur d'arrière-plan (93, 93A) inclut des parties d'arrière-plan dans une pluralité de couleurs prévues pour changer une surface circonférentielle faisant face au mécanisme de détection (401), et

la surface circonférentielle inclut une surface d'ombrage (407), une surface de transport (931a à 934a), une surface pour corriger un écart d'erreur d'agrandissement dans une direction de balayage principale (408), et une surface de réglage d'équilibre de gris (409),

dans lequel, lorsque le mécanisme de détection (401) lit l'indicateur de l'élément de transmission de couleur (94), le mécanisme de commutation de couleur d'arrière-plan (93, 93A) réalise un entraînement et une commande pour que la surface d'ombrage (407) passe à une couleur d'arrière-plan du support transporté (M), et le mécanisme de détection (401) lit les indicateurs (406L, 406R) avec une commande d'ombrage éteinte,

dans lequel la surface pour corriger l'écart d'erreur d'agrandissement (408) inclut une règle en verre (408) dans laquelle une règle (410) est formée par un groupe de multiples lignes longitudinales agencées le long de la direction de balayage principale du mécanisme de détection (401), et

dans le mode de correction d'écart d'erreur d'agrandissement, le mécanisme de détection (401) corrige, sur la base d'informations détectées à partir de the règle (410) de la règle en verre (408), les informations de position détectées à partir de la position de référence, et lorsque la distance (L0) entre les indicateurs (406L, 406R) lus par le mécanisme de détection (401) change relativement à une valeur de référence par rapport à la règle en verre (408), et puis calcule, sur la base d'informations de position concernant les indicateurs (406R, 406L), une valeur de correction d'erreur d'agrandissement pour annuler le changement pour que la distance (L0) soit corrigée en utilisant la valeur de correction d'erreur d'agrandissement.

2. Appareil de lecture d'image (5) selon la revendication 1, dans lequel le mécanisme de détection (401) dérive, sur la base des informations de position détectées à partir de la position de référence, des informations concernant une distance du support transporté (M) relativement au mécanisme de détection (401), et calcule, sur la base des informations concernant la distance, la position du support transporté (M).

3. Appareil de lecture d'image (5) selon la revendication 1 ou 2, dans lequel l'indicateur (406L, 406R) est prévu à une position sur un côté extérieur par rapport à deux extrémités d'une largeur maximum du support transporté (M) dans une direction croisant une direction dans laquelle le support transporté (M) est transporté.

4. Appareil de lecture d'image (5) selon la revendication 3, dans lequel l'indicateur (406L, 406R) inclut une paire de segments linéaires agencés avec un intervalle prédéterminé dans la direction croisant la direction dans laquelle le support transporté (M) est transporté, la paire de segments linéaires étant agencée sur l'élément de transmission de couleur (94) afin de s'étendre le long de la direction de transport.

5. Appareil de lecture d'image (5) selon la revendication 1, dans lequel, dans un mode de correction d'écart d'erreur d'agrandissement, le mécanisme de commutation de couleur d'arrière-plan (93, 93A) réalise un entraînement et une commande pour que la surface pour corriger l'écart d'erreur d'agrandissement (408) soit automatiquement positionnée à l'intérieur d'une zone de lecture du mécanisme de détection (401).

6. Appareil de transport configuré pour transporter un support en mettant en rotation et en entraînement une pluralité de corps de rotation, dans lequel l'appareil de transport inclut l'appareil de lecture d'image (5) de l'une quelconque des revendications 1 à 5 sur un chemin de transport du support (M).

7. Appareil de formation d'image, comprenant l'appareil de lecture d'image (5) de l'une quelconque des revendications 1 à 5.

FIG.1

FIG.2

EP 3 883 228 B1

FIG.3

EP 3 883 228 B1

FIG.4

# FIG.5

FIG.6

FIG.7

EP 3 883 228 B1

# FIG.8

```
MAGNIFICATION ERROR
DEVIATION CORRECTION MODE
          │
          ▼
ROTATE REVOLVER SO THAT                          ～S01
READING POSITION BECOMES WHITE BACKGROUND
          │
          ▼
READ POSITIONS OF
LONGITUDINAL LINES ON CONTACT GLASS,            ～S02
CALCULATE POSITION OF CONTACT GLASS,
AND UPDATE CORRECTION VALUE
          │
          ▼
ROTATE REVOLVER SO THAT                          ～S03
READING POSITION BECOMES GLASS SCALE
          │
          ▼
READ POSITIONS OF LONGITUDINAL LINES
ON GLASS SCALE, AND UPDATE                       ～S04
MAGNIFICATION ERROR CORRECTION VALUE
          │
          ▼
RETURN READING POSITION BACK TO                  ～S05
BLACK OR WHITE BACKGROUND ROLLER
          │
          ▼
       END
```

# FIG.9

**EP 3 883 228 B1**

**REFERENCES CITED IN THE DESCRIPTION**

**Patent documents cited in the description**

- JP 2018050139 A
- US 20180020108 A1
- US 20190202648 A1
- JP 2020047388 A